**Europäisches Patentamt**

(19) **European Patent Office**

**Office européen des brevets**

(11) Publication number : **0 276 925 B1**

(12) **EUROPEAN PATENT SPECIFICATION**

(45) Date of publication of patent specification :
18.03.92 Bulletin 92/12

(51) Int. Cl.⁵ : **F02B 29/06, F02B 27/00**

(21) Application number : **88300287.5**

(22) Date of filing : **14.01.88**

(54) **Supercharging internal combustion engines.**

(30) Priority : **24.01.87 GB 8701578**

(43) Date of publication of application :
**03.08.88 Bulletin 88/31**

(45) Publication of the grant of the patent :
**18.03.92 Bulletin 92/12**

(84) Designated Contracting States :
**DE FR GB IT SE**

(56) References cited :
**DE-A- 2 557 232**
**DE-A- 3 115 772**
**DE-A- 3 137 454**
**FR-A- 595 814**
**PATENT ABSTRACTS OF JAPAN, vol. 10, no.**
**218 (M-503)[2274], 30th July 1986; & JP-A-61 55**
**360 (MAZDA MOTOR CORP.) 19-03-1986**

(56) References cited :
**PATENT ABSTRACTS OF JAPAN, vol. 2, no. 9**
**(M-77)[6600], 23rd January 1978; & JP-A-52 121**
**104 (MITSUBISHI JIDOSHA KOGYO K.K.) 12-**
**10-1977**
**PATENT ABSTRACTS OF JAPAN, vol. 7, no. 95**
**(M-209)[1240], 21th April 1983; & JP-A-58 18**
**517 (SHIYUUICHI KITAMURA) 03-02-1983**

(73) Proprietor : **JAGUAR CARS LIMITED**
**Browns Lane**
**Allesley Coventry CV5 9DR West Midlands**
**(GB)**

(72) Inventor : **Parsons, Bryan Nigel Victor**
**2 Church Street**
**Stoney Stanton Leicestershire (GB)**

(74) Representative : **Cundy, Anthony Brian et al**
**Anthony Cundy & Company 384 Station Road**
**Dorridge**
**Solihull West Midlands B93 8ES (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to the supercharging of internal combustion engines.

The power of an internal combustion engine may be increased by increasing the volume of the air/fuel mixture that is delievered to the cylinders. This process of supercharging is achieved by increasing the pressure of the air or air/fuel mixture that is delivered to the cylinders, above atmospheric pressure. In the past supercharging of internal combustion engines has been achieved by one of two methods, that is by the use of a mechanically driven positive displacement pump or supercharger, or by an exhaust driven pump or turbocharger. In both cases, all the air supplied to the engine passes through the supercharging pump.

Mechanically driven superchargers work well at low engine speeds, but their size and power requirements have made these units unpopular and they have been superceded in recent years by turbochargers. Turbochargers, being driven by the exhaust gasses of the engine, impose a relatively low power loss and are relatively compact. The main drawbacks of turbochargers are their poor throttle response, their need to work at relatively high engine speeds for good performance, and problems with increase in temperature of the induced air due to conduction from the exhaust gasses. Furthermore, the known superchargers or turbochargers provide a continuous supply of pressurised air which is delivered to the engine when the inlet ports are closed as well as on the induction strokes. Moreover, pressurised air will be supplied to the engine throughout the induction stroke. However, it is more efficient to supercharge only towards the end of the induction stroke, when the amount of air drawn into the cylinder under normal aspiration is reducing.

Patent Specification Nos. DE-A-3115772, DE-A-3137454, FR-A-595,814 and JP-A-6155360 disclose systems of supercharging internal combustion engines, using pulsed jets of gas to induce pulsed induction charges. DE-A-3115772 discloses a system in which a pulsed jet of air is injected into a mixing chamber to induce a pulsed induction charge which is delivered to the inlet port of a cylinder, during the latter part of the inlet stroke. This system requires an engine driven compressor and means for pulsing the compressed air produced thereby. FR-A-595,814 discloses the use of exhaust gases to induce the induction charge, but this induction charge is delivered to the cylinder at the beginning of the induction stroke.

The present invention provides a method and apparatus by which one cylinder is supercharged by means of a jet of exhaust gases from another cylinder, a pulsed induction charge being delivered to the cylinder towards the end of the induction stroke.

According to one aspect of the present invention a method of supercharging an internal combustion engine comprises; injecting a high velocity pulsed jet of gas into a mixing chamber containing air or an air-/fuel mixture, so that momentum exchanged between the jet of gas and air or air/fuel mixture will accelerate the air or air/fuel mixture towards an outlet which is connected to an inlet port of a cylinder of the engine and further air or air/fuel mixture at atmospheric pressure will be entrained into the mixing chamber through an inlet thereto, to provide a pulsed induction charge of air or air/fuel mixture at increased pressure, said pulsed induction charge being delivered to the cylinder so that an induction charge pulse is timed to arrive at the cylinder towards the end of the induction stroke, characterised in that exhaust gases are tapped off each of the cylinders towards the end of its expansion stroke to provide high velocity pulsed jets of gas, the high velocity pulsed jet of gas produced by one cylinder being injected into a mixing chamber connected to an inlet port of another cylinder to produce a pulsed induction charge of air or air/fuel mixture which is delivered to said other cylinder towards the end of its induction stroke.

According to a preferred embodiment of the invention the induction charge pulse is delivered to the cylinder after the piston has completed of the order of 90% of its induction stroke.

The pulsed gas jet injected into the mixing chamber is preferably at supersonic velocity and may have a mass flow of approximately ten per cent of the cylinder capacity. In such circumstances, boost pressures of, for example the order of twenty-five per cent may be achieved.

According to a further aspect of the present invention an apparatus for supercharging an internal combustion engine comprises a mixing chamber having an inlet open to a source of air or an air/fuel mixture at atmospheric pressure and an outlet adapted to be connected to an inlet port of a cylinder of an internal combustion engine, a nozzle opening into said mixing chamber and means of supplying a pulse of gas at high pressure to said nozzle to inject a high velocity jet of gas into the mixing chamber, so that said jet of gas will accelerate the air or air/fuel mixture in the mixing chamber towards the outlet and entrain more air or air/fuel mixture into the mixing chamber through the inlet to form an induction charge pulse, means being provided to time delivery of said pulse to a cylinder of the engine, towards the end of an induction stroke, characterised in that the nozzle is connected to a port in one cylinder, the port being controlled to deliver a pulsed jet of exhaust gases to the nozzle towards the end of the expansion stroke of said one cylinder, the nozzle opening into a mixing chamber connected to another cylinder so that the jet of exhaust gases passing through said nozzle will produce a pulsed induction charge timed to be delivered to said other cylinder towards the end of its induction stroke.

Preferably, separate pulsed jets of gas will be produced for each cylinder of the combustion engine and these will be fed via nozzles to separate mixing chambers, each serving one of the cylinders. However, the pulsed jets of gas may be delivered to a common mixing chamber which will deliver a pulsed induction charge, via a tuned induction manifold common to all the cylinders.

Various embodiments of the invention are now described, by way of example only, with reference to the accompanying drawings in which:

Figure 1 is a schematic illustration of a supercharging system formed in accordance with the present invention;

Figure 2 is an enlarged view of the mixing chamber/jet assembly used in the system illustrated in Figure 1;

Figure 3 shows an alternative form of mixing chamber/jet assembly used in a modified version of the system illustrated in Figure 1; and

Figure 4 shows a schematic layout of a cylinder with piston controlled port used in the system illustrated in Figure 1.

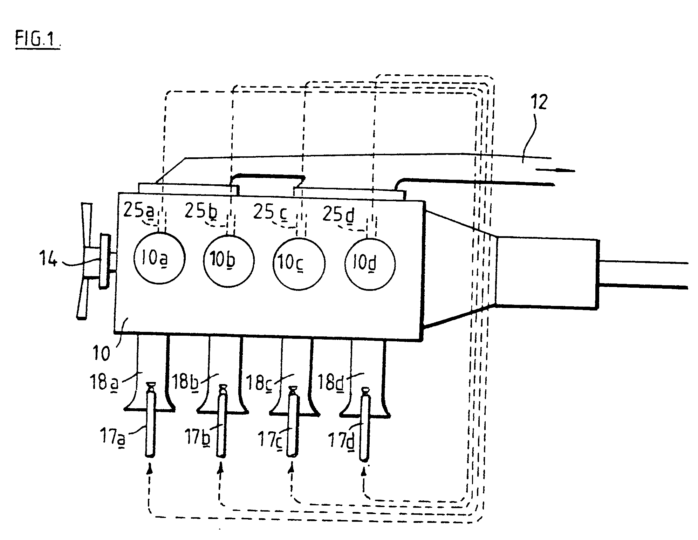

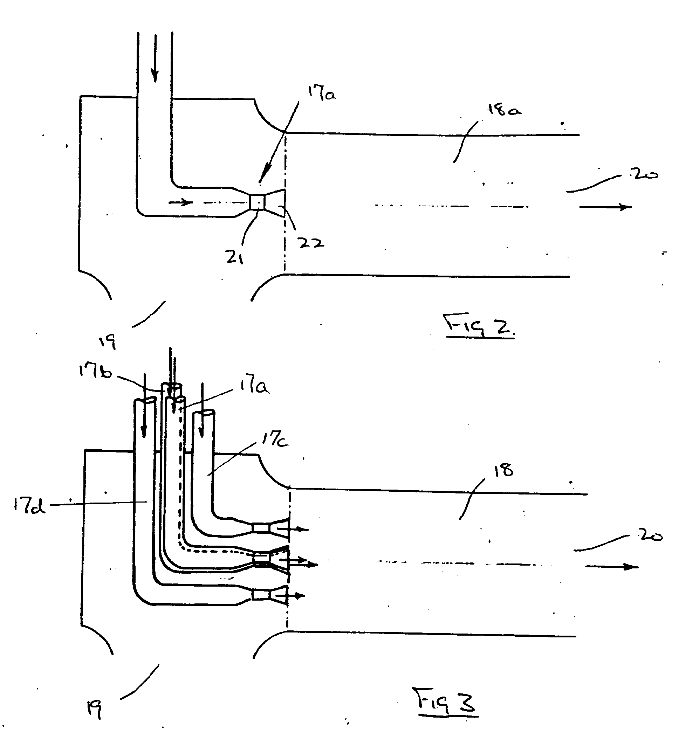

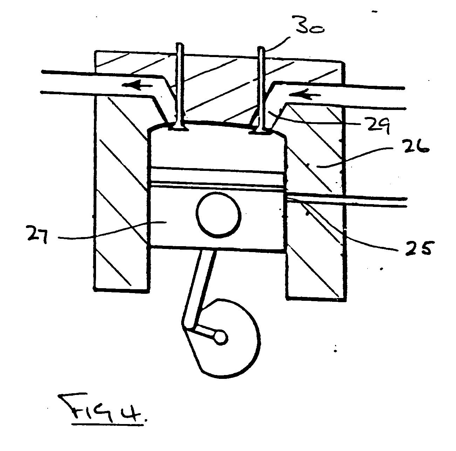

As illustrated in Figure 1 an internal combustion engine has four cylinders 10a-10d, each cylinder 10a-10d having a mixing chamber 18a-18d connected to the inlet port thereof. A nozzle 17a-17d as described in greater detail below with reference to Figure 2, opens into each of the mixing chambers 18a-18d. The nozzles 17a-17d associated with each of the cylinders 10a-10d are connected to a port 25 opening in to another cylinder 10a-10d. As illustrated in greater detail in Figure 4, the port 25 is provided in the wall of the cylinder 10a, in a position where it will be covered and uncovered by the piston 27, at a point towards the end of its stroke. Uncovering the port 25 towards the end of the expansion stroke of the piston 27 will enable a pulse of exhaust gases at high pressure to pass through the port 25 to the nozzle 17a-17d connected thereto.

As illustrated in greater detail in Figure 2, the nozzles 17a-17d have a narrow throat portion 21 and a divergent nozzle portion 22. The dimensions of the nozzles 17a-17d are such that the pulse of exhaust gases that are delivered thereto, are accelerated to sonic velocity in the throat portion 21 and to supersonic velocity upon expansion into the divergent nozzle portion 22. Upon exiting from the nozzle 17a-17d into mixing chambers 18a-18d, the supersonic jet of air accelerates the air in mixing chamber 18a-18d towards an outlet 20 and entrains further air into the mixing chamber 18a-18d from atmosphere through an inlet 19, to create an induction charge pulse which is delivered to the inlet of cylinder 10a-10d.

With a four cylinder engine, cylinders 10a and 10d are normally 180° out of phase with cylinders 10b and 10c, so that when cylinder 10a is on the expansion stroke, cylinder 10d will be on the induction stroke, cylinder 10b is on its exhaust stroke and cylinder 10c is on its compression stroke. The mixing chamber 18a which is connected via nozzle 17a and port 25d to cylinder 10d, is consequently arranged to deliver induction charge pulses to the inlet port of cylinder 10a, so that the induction charge pulses are delivered towards the end of the induction stroke of cylinder 10a. Similarly, the port 25 of cylinder 10a will be connected to the inlet port of cylinder 10d; port 25 of cylinder 10b will be connected to the inlet port of cylinder 10c and port 25 of cylinder 10c will be connected to the inlet port of cylinder 10b. With these arrangements, the position of the port 25 must be set to take account of delays in delivering the induction charge pulse to the inlet port of the associated cylinder, so that the appropriate timing of the pulse is achieved.

The above system may be used with fuel injection systems, in which case air drawn into the mixing chamber 18a-18d to form the induction charge, is delivered directly to the cylinder 10a-10d associated with that mixing chamber 18a-18d, and the appropriate amount of fuel is injected. Alternatively, the system described above may be modified so that an air/fuel mixture is supplied via inlet 19 to mixing chamber 18a-18d. As described above, the air/fuel mixture will then be pressurised to form a pulsed induction charge and may then be fed directly to the cylinders by conventional valve means. With engines of this type the inlet valve will typically open at about 30° before top dead centre and close at about 55° after bottom dead centre. The induction charge pulse will typically be delivered to the cylinder 10a-10d after it has completed 90% of its induction stroke, so that air or air/fuel mixture at a pressure in excess of atmospheric pressure will be forced into the cylinder 10a-10d until the inlet valve closes at 55° after bottom dead centre.

As illustrated in Figure 3, all four nozzles 17a-17d may be grouped together and open into a common mixing chamber 18, which may be connected to the inlet ports of all four cylinders 10a-10d, by common inlet manifolds. As pulsed jets of exhaust gas are fed to the nozzles 17a-17d, each pulse will produce an induction charge pulse as described above. A series of induction charge pulses will thus be fed to the induction manifold, these pulses being timed to arrive at one cylinder 10a-10d of the engine, at the appropriate point in its induction stroke.

## Claims

1. A method of supercharging an internal combustion engine including injecting a high velocity pulsed jet of gas into a mixing chamber (18a-d; 18) containing air or an air/fuel mixture, so that the momentum exchange between the jet of gas and air or air/fuel mixture will accelerate the air or air/fuel mixture towards an outlet (20) which is connected to an inlet port of a cylinder (10a-d) of the engine (10) and further air or air/fuel mixture at atmospheric pressure will be entrained into the mixing chamber (18a-d; 18) through an inlet (19) thereto, to provide a pulsed induction charge of air or air/fuel mixture at increased pressure, said pulsed induction charge being delivered to the cylinder (10a-d) so that an induction charge pulse is timed to arrive at the cylinder (10a-d) towards the end of the induction stroke, characterised in that exhaust gases are tapped off each of the cylinders (10a-d) towards the end of its expansion stroke to provide high velocity pulsed jets of gas, the high velocity pulsed jet of gas produced by one cylinder (10a-d) being injected into a mixing chamber (18a-d; 18) connected to an inlet port of another cylinder (10a-d) to produce a pulsed induction charge of air or air/fuel mixture which is delivered to said other cylinder (10a-d) towards the end of its induction stroke.

2. A method according to Claim 1 characterised in that the induction pulse is delivered to the cylinder (10a-d) after the piston (27) has completed of the order of 90% of its induction stroke.

3. A method according to Claim 1 or 2 characterised in that the pulsed gas jet is injected into the mixing chamber (18a-d; 18) at supersonic velocity.

4. A method according to any one of Claims 1 to 3 characterised in that the mass flow rate of the jet of gas is of the order of ten per cent of the charge requirement of the cylinder (10a-d).

5. A method according to any one of Claims 1 to 4 characterised in that the jet of gas is provided by forcing a high pressure pulse of gas through a nozzle (17a-d).

6. An apparatus for supercharging an internal combustion engine including; a mixing chamber (18a-d; 18) having an inlet (19) open to a source of air or an air/fuel mixture at atmospheric pressure and an outlet (20) adapted to be connected to an inlet port of a cylinder (10a-d) of an internal combustion engine (10), a nozzle (17a-d) opening into said mixing chamber (18a-d; 18) and means (25) for supplying a pulse of gas at high pressure to said nozzle (17a-d) to inject a high velocity jet of gas into the mixing chamber (18a-d; 18), so that said jet of gas will accelerate the air or air/fuel mixture in the mixing chamber (18a-d; 18) towards the outlet (20) and entrain more air or air/fuel mixture into the mixing chamber (18a-d; 18) through the inlet (19) to form an induction charge pulse, means being provided to time delivery of said pulse to a cylinder (10a-d) of the engine (10), towards the end of an induction stroke, characterised in that the nozzle (17a-d) is connected to a port (25) in one cylinder (10a-d), the port (25) being controlled to deliver a pulsed jet of exhaust gases to the nozzle (17a-d) towards the end of the expansion stroke of said one cylinder (10a-d), the nozzle (17a-d) opening into a mixing chamber (18a-d); 18) connected to another cylinder (10a-d) so that the jet of exhaust gases passing through said nozzle (17a-d) will produce a pulsed induction charge timed to be delivered to said other cylinder (10a-d) towards the end of its induction stroke.

7. An apparatus according to Claim 6 characterised in that the nozzle (17a-d) is connected to a piston (27) controlled port (25) in a cylinder (10a-d) of the engine (10), said port (25) being uncovered towards the end of an expansion stroke of the piston (27), so as to deliver a pulse of high pressure gas to the nozzle (17a-d).

8. An apparatus according to any one of Claims 6 or 7 characterised in that individual nozzle (17a-d)/mixing chamber (18a-d) assemblies are provided for each cylinder (10a-d) of a multi-cylinder engine (10).

9. An apparatus according to Claim 8 characterised in that several cylinders (10a-d) are each connected to an individual nozzle (17a-d), each nozzle (17a-d) serving one other of the cylinders (10a-d), the linked cylinders (10a and 10d, 10d and 10a, 10b and 10c, 10c and 10b) being arranged so that the pulse of high pressure combustion gases delivered from one cylinder (10a-d) is timed to provide a supercharging boost to the linked cylinder (10a-d), which coincides with the end of delivery of the charge to that cylinder (10a-d).

10. An apparatus according to Claim 6 or 7 characterised in that several nozzles (17a-d) open into a common mixing chamber (18) which serves a plurality of cylinders (10a-d) of a multi-cylinder engine (10).

**Patentansprüche**

1. Verfahren zum Aufladen einer Brennkraftmaschine, welches das Einführen eines pulsförmigen Hochgeschwindigkeitsgasstromes in eine Mischkammer (18a-d; 18) beinhaltet, welche Luft oder eine Luft/Kraftstoff-Mischung enthält, so daß der kinetische Energieaustausch zwischen dem Gasstrom und der Luft oder Luft/Kraftstoff-Mischung die Luft oder Luft/Kraftstoff-Mischung in Richtung eines Auslasses (20) beschleunigt wird, der mit einer Einlaßöffnung eines Zylinders (10a-d) der Brennkraftmaschine (10) verbunden ist, und eine weitere Menge Luft oder eine weitere Menge der Luft/Kraftstoff-Mischung bei Atmosphärendruck in die Mischkammer (18a-d; 18) durch einen Einlaß (19) zu ihr mitgerissen wird, um eine pulsförmige Einlaßfüllung von Luft oder einer Luft/Kraftstoff-Mischung bei erhöhtem Druck zu schaffen, wobei die pulsförmige Einlaßfüllung dem Zylinder (10a-d) zugeführt wird, so daß ein Einlaßfüllungsstoß zeitlich so gesteuert ist, daß er an dem Zylinder (10a-d) gegen Ende des Einlaßhubes ankommt, dadurch gekennzeichnet, daß die Abgase von jedem der Zylinder (10a-d) gegen Ende seines Expansionshubes abgeführt werden, um pulsförmige Hochgeschwindigkeitsgasströme zu schaffen, wobei der pulsförmige Hochgeschwindigkeitsgasstrom, der von einem Zylinder (10a-d) erzeugt wird, in eine Mischkammer (18a-d; 18) eingegeben wird, die mit einer Einlaßöffnung eines anderen Zylinders (10a-d) verbunden ist, um eine pulsförmige Einlaßfüllung von Luft oder der Luft/Kraftstoff-Mischung zu erzeugen, die dem anderen Zylinder (10a-d) gegen Ende seines Einlaßhubes zugeführt wird.

2. Verfahren nach Anspruch 1, dadurch gekennzeichnet, daß der Einlaßstoß dem Zylinder zugeführt wird, nachdem der Kolben (27) etwa 90 % seines Einlaßhubes durchgeführt hat.

3. Verfahren nach Anspruch 1 oder 2, dadurch gekennzeichnet, daß der pulsförmige Gasstrom in die Mischkammer (18a-d; 18) mit Überschallgeschwindigkeit eingegeben wird.

4. Verfahren nach einem der Ansprüche 1 bis 3, dadurch gekennzeichnet, daß der Mengendurchsatz des Gasstromes ungefähr 10 % der geforderten Füllung des Zylinders (10a-d) ist.

5. Verfahren nach einem der Ansprüche 1 bis 5, dadurch gekennzeichnet, daß der Gasstrom dadurch geschaffen wird, daß ein Hochdruckgasstoß durch eine Düse (17a-d) gezwungen wird.

6. Vorrichtung zum Aufladen einer Brennkraftmaschine, mit einer Mischkammer (18a-d; 18), die einen Einlaß (19) hat, der zu einer Luftquelle oder Luft/Kraftstoff-Mischungsquelle bei Atmosphärendruck hin offen ist, und einen Auslaß (20) hat, mit einer Einlaßöffnung eines Zylinders (10a-d) einer Brennkraftmaschine (10) verbindbar ist, einer Düse (17a-d), die in die Mischkammer (18a-d; 18) mündet und einer Einrichtung (25), um einen Gasstoß bei hohem Druck der Düse (17a-d) zuzuführen, um einen Hochgeschwindigkeitsgasstrom in die Mischkammer (18a-d; 18) einzugeben, so daß dieser Gasstrom die Luft oder die Luft/Kraftstoff-Mischung in der Mischkammer (18a-d; 18) in Richtung des Auslasses (20) beschleunigen und mehr Luft oder mehr von der Luft/Kraftstoff-Mischung in die Mischkammer (18a-d; 18) durch den Einlaß (19) mitreißen wird, um einen Einlaßfüllstoß zu bilden, wobei eine Einrichtung vorgesehen ist, um die Zufuhr des Stoßes zu einem Zylinder (10a-d) der Brennkraftmaschine (10) gegen Ende eines Einlaßhubes zeitlich festzulegen, dadurch gekennzeichnet, daß die Düse (17a-d) mit einer Öffnung (25) in einem zylinder (10a-d) verbunden ist, wobei die Öffnung (25) gesteuert wird, um einen pulsförmigen Strom von Abgasen der Düse (17a-d) gegen Ende des Expansionshubes des einen Zylinders (10a-d) zuzuführen, wobei die Düse (17a-d) in eine Mischkammer (18a-d; 18) mündet, die mit einem anderen Zylinder (10a-d) verbunden ist, so daß der Strom von Abgasen, der durch die Düse (17a-d) geht, eine pulsförmige Einlaßfüllung erzeugen wird, die so gesteuert ist, daß sie dem anderen Zylinder (10a-d) gegen Ende des Einlaßhubes zugeführt wird.

7. Vorrichtung nach Anspruch 6, dadurch gekennzeichnet, daß die Düse (17a-d) mit einer durch einen Kolben (27) gesteuerten Öffnung (25) in einem Zylinder (10a-d) der Brennkraftmaschine (10) verbunden ist, wobei die Öffnung (25) gegen Ende eines Expansionshubes des Kolbens (27) freigegeben wird, um einen Hochdruckgasstoß der Düse (17a-d) zuzuführen.

8. Vorrichtung nach einem der Ansprüche 6 oder 7, dadurch gekennzeichnet, daß einzelne Düsen (17a-d)/Mischkammer (18a-d)-Anordnungen für jeden Zylinder (10a-d) einer Mehrzylinderbrennkraftmaschine (10) vorgesehen sind.

9. Vorrichtung nach Anspruch 8, dadurch gekennzeichnet, daß jeder von mehreren Zylindern (10a-d) mit einer einzelnen Düse (17a-d) verbunden ist, wobei jede Düse (17a-d) einem anderen der Zylinder (10a-d) dient, wobei die verbundenen Zylinder (10a und 10d, 10d und 10a, 10b und 10c, 10c und 10b) so angeordnet sind, daß der Stoß von Hochdruckverbrennungsgasen, der von einem Zylinder (10a-d) geliefert wird, so gesteuert ist, einen Aufladungsstoß dem verbundenen Zylinder (10a-d) zu geben, der mit dem Ende der Zufuhr der Füllung zu diesem Zylinder (10a-d) zusammenfällt.

10. Vorrichtung nach Anspruch 6 oder 7, dadurch gekennzeichnet, daß mehrere Düsen (17a-d) in eine gemeinsame Mischkammer (18) münden, die einer Vielzahl von Zylindern (10a-d) einer Mehrzylinderbrennkraftmaschine (10) dient.

**Revendications**

1. Procédé de suralimentation d'un moteur à combustion interne, comprenant l'injection d'un jet de gaz pulsé à grande vitesse dans une chambre de mélange (18a-d; 18) contenant de l'air ou un mélange air/carburant, de sorte que l'énergie cinétique échangée entre le jet de gaz et l'air ou le mélange air/carburant accélère l'air ou le mélange air/carburant vers un orifice de sortie (20) relié à une lumière d'admission d'un cylindre (10a-d) du moteur (10), et qu'un supplément d'air ou de mélange air/carburant à la pression atmosphérique est entraîné dans la chambre de mélange (18a-d; 18) à travers un orifice d'entrée (19) de cette dernière, afin de fournir une charge pulsée d'admission d'air ou de mélange air/carburant à une pression accrue, cette charge d'admission pulsée étant délivrée au cylindre (10a-d) de telle sorte qu'une impulsion de charge d'admission est synchronisée de manière à atteindre le cylindre (10a-d) vers la fin de la course d'admission, caractérisé en ce que des gaz d'échappement sont soutirés de chacun des cylindres (10a-d) vers la fin de leur course de détente afin de produire des jets de gaz pulsés à grande vitesse, le jet de gaz pulsé à grande vitesse produit par un cylindre (10a-d) étant injecté dans une chambre de mélange (18a-d; 18) reliée à une lumière d'admission d'un autre cylindre (10a-d), afin de produire une charge pulsée d'admission d'air ou de mélange air/carburant, qui est délivrée à cet autre cylindre (10a-d) vers la fin de sa course d'admission.

2. Procédé selon la revendication 1, caractérisé en ce que l'impulsion d'admission est délivrée au cylindre (10a-d) une fois que le piston (27) a accompli environ 90% de sa course d'admission.

3. Procédé selon la revendication 1 ou 2, caractérisé en ce que le jet de gaz pulsé est injecté dans la chambre de mélange (18a-d; 18) à une vitesse supersonique.

4. Procédé selon l'une quelconque des revendications 1 à 3, caractérisé en ce que le débit massique du jet de gaz est de l'ordre de dix pour cent de la demande de charge du cylindre (10a-d).

5. Procédé selon l'une quelconque des revendications 1 à 4, caractérisé en ce que le jet de gaz est fourni en forçant une impulsion de gaz sous haute pression à travers un injecteur (17a-d).

6. Dispositif pour suralimenter un moteur à combustion interne, comprenant une chambre de mélange (18a-d; 18) possédant un orifice d'entrée (19) ouvert vers une source d'air ou de mélange air/carburant à la pression atmosphérique et un orifice de sortie (20) conçu pour être relié à une lumière d'admission d'un cylindre (10a-d) d'un moteur à combustion interne (10), un injecteur (17a-d) débouchant dans la chambre de mélange (18a-d; 18), et comprenant des moyens pour fournir une impulsion de gaz sous haute pression à l'injecteur (17a-d) afin d'injecter un jet de gaz à grande vitesse dans la chambre de mélange (18a-d; 18), de sorte que ce jet de gaz accélère l'air ou le mélange air/carburant dans la chambre de mélange (18a-d; 18) vers l'orifice de sortie (20) et entraîne plus d'air ou de mélange air/carburant dans la chambre de mélange (18a-d; 18) à travers l'orifice d'entrée (19) afin de former une impulsion de charge d'admission, des moyens étant prévus pour synchroniser la délivrance de cette impulsion à un cylindre (10a-d) du moteur (10) vers la fin d'une course d'admission, caractérisé en ce que l'injecteur (17a-d) est relié à une lumière (25) d'un cylindre (10a-d), qui est commandée de manière à délivrer un jet pulsé de gaz d'échappement à l'injecteur (17a-d) vers la fin de la course de détente de ce cylindre (10a-d), et l'injecteur (17a-d) débouchant dans une chambre de mélange (18a-d; 18) reliée à un autre cylindre (10a-d), de sorte que le jet de gaz d'échappement passant par l'injecteur (17a-d) produit une charge pulsée d'admission qui est synchronisée de manière à être délivrée à cet autre cylindre (10a-d) vers la fin de sa course d'admission.

7. Dispositif selon la revendication 6, caractérisé en ce que l'injecteur (17a-d) est relié à une lumière (25) d'un cylindre (10a-d) du moteur (10) qui est commandée par le piston (27), la lumière (25) étant découverte vers la fin d'une course de détente du piston (27), de manière à délivrer à l'injecteur (17a-d) une impulsion de gaz sous haute pression.

8. Dispositif selon la revendication 6 ou 7, caractérisé en ce que des unités individuelles injecteur (17a-d)/chambre de mélange (18a-d) sont prévues pour chaque cylindre (10a-d) d'un moteur (10) à plusieurs cylindres.

9. Dispositif selon la revendication 8, caractérisé en ce que plusieurs cylindres (10a-d) sont chacun reliés à un injecteur individuel (17a-d), chaque injecteur (17a-d) servant un autre des cylindres (10a-d), et les cylindres couplés (10a et 10d, 10d et 10a, 10b et 10c, 10c et 10b) étant disposés de telle sorte que l'impulsion de gaz de combustion sous hautre pression délivrée par un cylindre (10a-d) est synchronisée de manière à fournir au cylindre couplé (10a-d) une suralimentation qui coïncide avec la fin de la délivrance de la charge à ce cylindre (10a-d).

10. Dispositif selon la revendication 6 ou 7, caractérisé en ce que plusieurs injecteurs (17a-d) s'ouvrent dans une chambre de mélange commune (18), qui sert plusieurs cylindres (10a-d) d'un moteur (10) à plusieurs cylindres.

FIG.1.

EP 0 276 925 B1

Fig 2.

Fig 3

FIG 4.